# EUROPEAN PATENT SPECIFICATION

(11) **EP 4 446 028 B1**
(45) Date of publication and mention of the grant of the patent: **19.08.2026**
(21) Application number: 22920435.9
(22) Date of filing: 09.11.2022
(51) Int. Cl.: B21D 22/20, B21D 22/00, G01B 11/24, G06F 30/10, G06F 30/23, G06F 111/10, G06F 113/22, G06F 119/14

(54) **PRESS FORMING ANALYSIS METHOD, PRESS FORMING ANALYSIS APPARATUS, AND PRESS FORMING ANALYSIS PROGRAM**
PRESSFORMUNGSANALYSEVERFAHREN, PRESSFORMUNGSANALYSEVORRICHTUNG UND PRESSFORMUNGSANALYSEPROGRAMM
PROCÉDÉ D'ANALYSE DE FORMATION DE PRESSE, APPAREIL D'ANALYSE DE FORMATION DE PRESSE ET PROGRAMME D'ANALYSE DE FORMATION DE PRESSE

(30) Priority: 17.01.2022 JP 2022004757; 16.02.2022 JP 2022021763
(43) Date of publication of application: 16.10.2024
(73) Proprietor: JFE Steel Corporation, Tokyo 100-0011 (JP)
(72) Inventor: OGAWA, Takeshi, Tokyo 100-0011 (JP); SUMIKAWA, Satoshi, Tokyo 100-0011 (JP); YAMASAKI, Yuji, Tokyo 100-0011 (JP); SHINMIYA, Toyohisa, Tokyo 100-0011 (JP)
(74) Representative: Hoffmann Eitle
(86) International application number: PCT/JP2022/041724
(87) International publication number: WO 2023/135914

(56) References cited:
- WO-A1-2019/167793
- WO-A1-2024/019168
- JP-A- 2012 250 245
- JP-A- 2020 146 755
- JP-A- H08 243 657
- JP-B2- 4 052 211
- US-A1- 2020 309 635
- HIRAMOTO JIRO ET AL: "Improvement of Shape Accuracy in Press-Formed Parts of High-Strength Steel by Springback-Root-Cause Analysis", vol. 725, 15 December 2016 (2016-12-15), pages 610 - 615, XP055890586, Retrieved from the Internet <URL:https://www.scientific.net/KEM.725.610.pdf> [retrieved on 20250117], DOI: 10.4028/www.scientific.net/KEM.725.610
- DE-CARVALHO R. ET AL: "Blank optimization in a stamping process-Influence of the geometry definition", FINITE ELEMENTS IN ANALYSIS AND DESIGN., vol. 61, 20 July 2012 (2012-07-20), NL, pages 75 - 84, XP093240285, ISSN: 0168-874X, DOI: 10.1016/j.finel.2012.06.009
- PARK KEECHEOL ET AL: "Effects of blank curvature and tool conditions on the spring back of thin sheet panel formed through local embossing and edge L-bending", AIP CONFERENCE PROCEEDINGS, vol. 1383, 22 August 2011 (2011-08-22), pages 1115 - 1120, XP093296395, ISBN: 978-0-7354-0949-1, Retrieved from the Internet <URL:https://pubs.aip.org/aip/acp/article/1383/1/1115/872585/Effects-of-Blank-Curvature-and-Tool-Conditions-on> [retrieved on 20260414], DOI: 10.1063/1.3623728

## Description

### Field

The present invention relates to a press forming analysis method, a press forming analysis apparatus, and a press forming analysis program for predicting an influence of a shape variation of a blank taken from a metal sheet having the shape variation in a case where press forming is performed by using the blank.

### Background

In the progress of improvement of collision safety of an automotive body due to tightening of an automobile collision safety standard, weight reduction of automotive body is also required in order to achieve improvement of fuel efficiency of an automobile in response to recent carbon dioxide emission regulations. In order to achieve both the collision safety performance and the weight reduction of automotive body, a growing number of metal sheets having a higher strength than before are adopted in automotive bodies.

An actual metal sheet from which a blank for obtaining a press-formed part is taken has not been completely flat, but has had a waveform (shape variation). Therefore, an actual blank taken from the metal sheet is not necessarily flat, and may have a shape variation.

When a blank taken from a metal sheet having such a waveform by punching and shearing is used to be press-formed into an automotive part, the press-formed part obtained after the press forming may deviate from targeted dimensional accuracy due to the shape variation.

For example, Patent Literatures 1 and 2 are disclosed as techniques for selecting a press-formed part deviating from the targeted dimensional accuracy.

### Citation List

### Patent Literature

Patent Literature 1: JP S62-047504 A
Patent Literature 2: JP 2019-002834 A

US 2020309635A1 discloses a springback amount variation cause analysis method involving performing press forming analysis under first press forming conditions and calculating a corresponding first stress distribution, performing press forming analysis under second press forming conditions and calculating a corresponding second stress distribution, setting a stress difference distribution between the first and second stress distributions, and analyzing a springback variation cause.

### Summary

### Technical Problem

The techniques disclosed in Patent Literature 1 or 2 compares the shapes of press-formed parts after press forming with each other, and cannot predict an influence of the shape variation of a blank before the press forming on the press-formed parts after the press forming. The influence of the shape variation of a blank on the shape of a press-formed part has not been predicted. Furthermore, a portion of the press-formed part susceptible to the influence of the shape variation of the blank has not been identified.

Moreover, a plurality of blanks is taken from one metal sheet. Even in a case of a blank taken from the same metal sheet, portions exhibiting unevenness of respective blanks vary depending on the difference in positions where the blanks have been taken. The difference in shape variations (unevenness) of the blanks causes a difference in the shapes of press-formed parts after press forming. Therefore, in predicting an influence of a shape variation of a blank on a press-formed part, it is also necessary to consider the difference in shape variations of respective blanks.

The present invention has been made to solve the above-described problems, and an object thereof is to provide a press forming analysis method, a press forming analysis apparatus, and a press forming analysis program for predicting an influence of a shape variation of a blank taken from a metal sheet having the shape variation in a case where press forming is performed by using the blank. Solution to Problem

The above-mentioned drawbacks are resolved by the invention as set forth in the independent claims. Further embodiments are defined by the dependent claims. A press forming analysis method according to the present invention predicts an influence of a shape variation of a blank taken from a metal sheet having the shape variation in a case where press forming is performed by using the blank, and includes: a first blank generation step of generating a standard waveform blank model having a waveform with a predetermined wavelength and a predetermined amplitude in accordance with the shape variation; a first shape acquisition step of acquiring a shape of a press-formed part after die release as a first shape by performing press forming analysis by using the standard waveform blank model in a case where press forming is performed with a predetermined tool-of-press-forming model; a second blank generation step of generating one or a plurality of types of cycle deviation waveform blank models having a waveform with a same amplitude as an amplitude of a waveform of the standard waveform blank model and a cycle deviating from a cycle of the waveform of the standard waveform blank model; a second shape acquisition step of acquiring a shape of a press-formed part after die release as a second shape by performing press forming analysis by using the cycle deviation waveform blank model in a case where press forming is performed with the predetermined tool-of-press-forming model; and a deviation amount acquisition step of obtaining a portion where both of the shapes deviate from each other and a deviation amount by comparing the first shape with one or a plurality of types of second shapes.

The standard waveform blank model generated in the first blank generation step may be a blank model generated based on a measurement result obtained by measuring a shape of an actual blank taken from the metal sheet.

In the deviation amount acquisition step, a difference between a springback amount of a predetermined portion in the first shape and a springback amount of a same portion as the predetermined portion of the first shape in the second shape may be acquired as the deviation amount.

An identification step of identifying a portion where the deviation amount exceeds a preset threshold as a portion requiring a countermeasure may be included.

A press forming analysis apparatus according to the present invention predicts an influence of a shape variation of a blank taken from a metal sheet having the shape variation in a case where press forming is performed by using the blank, and includes: a first blank generation unit configured to generate a standard waveform blank model having a waveform with a predetermined wavelength and a predetermined amplitude in accordance with the shape variation; a first shape acquisition unit configured to acquire a shape of a press-formed part after die release as a first shape by performing press forming analysis by using the standard waveform blank model in a case where press forming is performed with a predetermined tool-of-press-forming model; a second blank generation unit configured to generate one or a plurality of types of cycle deviation waveform blank models having a waveform with a same amplitude as an amplitude of a waveform of the standard waveform blank model and a cycle deviating from a cycle of the waveform of the standard waveform blank model; a second shape acquisition unit configured to acquire a shape of a press-formed part after die release as a second shape by performing press forming analysis by using the cycle deviation waveform blank model in a case where press forming is performed with the predetermined tool-of-press-forming model; and a deviation amount acquisition unit configured to obtain a portion where both of the shapes deviate from each other and a deviation amount by comparing the first shape with one or a plurality of types of second shapes.

The standard waveform blank model generated by the first blank generation unit may be a blank model generated based on a measurement result obtained by measuring a shape of an actual blank taken from the metal sheet.

The deviation amount acquisition unit may be configured to acquire, as the deviation amount, a difference between a springback amount of a predetermined portion in the first shape and a springback amount of a same portion as the predetermined portion of the first shape in the second shape.

An identification unit configured to identify a portion where the deviation amount exceeds a preset threshold as a portion requiring a countermeasure may be included.

A press forming analysis program according to the present invention causes a computer to function as the press forming analysis apparatus according to the present invention.

### Advantageous Effects of Invention

According to the present invention, it is possible to know a portion where a shape variation of a blank has a large influence on the shape of a press-formed part after springback, specifically, a portion where the shape of the press-formed part after springback is made likely to deviate by the occurrence of the difference in shape variations (unevenness) of respective blanks and a deviation amount thereof. Furthermore, a portion of a blank having a particularly large influence is identified based on a deviation amount and a predetermined threshold to rapidly take countermeasures therefor, which can improve productivity.

### Brief Description of Drawings

FIG. 1 is an explanatory diagram of respective steps of a press forming analysis method according to a first embodiment.
FIG. 2 is an external view of a part targeted in the first embodiment.
FIG. 3 is an explanatory diagram of a standard waveform blank model having a cyclic waveform.
FIG. 4 includes an explanatory view (FIG. 4(a)) of a first shape subjected to press forming analysis using the standard waveform blank model in FIG. 3 and a diagram (FIG. 4(b)) illustrating an amount of shape change in FIG. 4(a) in association with a blank shape.
FIG. 5 is an explanatory diagram of a cycle deviation waveform blank model having a waveform with the same amplitude as that of a waveform of the standard waveform blank model in FIG. 3 and a cycle deviating from that of the waveform of the standard waveform blank model in FIG. 3.
FIG. 6 includes an explanatory view (FIG. 6(a)) of a second shape subjected to press forming analysis using the cycle deviation waveform blank model in FIG. 5 and a diagram (FIG. 6(b)) illustrating an amount of shape change in FIG. 6(a) in association with a blank shape.
FIG. 7 illustrates a deviation amount in a case where the first shape in FIG. 4 is compared with the second shape in FIG. 6.
FIG. 8 is an explanatory diagram of a press forming analysis apparatus according to a second embodiment.
FIG. 9 is an explanatory diagram of a cycle deviation waveform blank model according to an example.
FIG. 10 includes an explanatory view (FIG. 10(a)) of a second shape subjected to press forming analysis using the cycle deviation waveform blank model in FIG. 9 and a diagram (FIG. 10(b)) illustrating an amount of shape change in FIG. 10(a) in association with a blank shape.
FIG. 11 illustrates a deviation amount in a case where the first shape in FIG. 4 is compared with the second shape in FIG. 10.

### Description of Embodiments

### [First Embodiment]

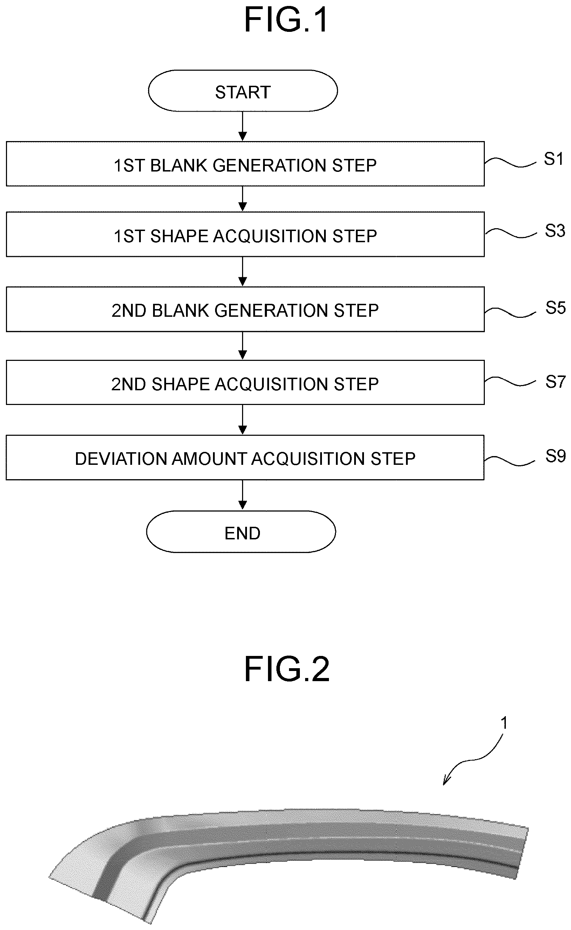

A press forming analysis method according to a present embodiment is used for predicting an influence of a shape variation (uneven waveform) of a blank taken from a metal sheet having the shape variation in a case where press forming (e.g., crash forming and deep drawing) is performed by using the blank. As illustrated in FIG. 1, the press forming analysis method according to the embodiment includes: a first blank generation step S1; a first shape acquisition step S3; a second blank generation step S5; a second shape acquisition step S7; and a deviation amount acquisition step S9. The first blank generation step S1 is a generation step of standard waveform blank model. The first shape acquisition step S3 is a shape acquisition step of press-formed part using standard waveform blank. The second blank generation step S5 is a generation step of cycle deviation waveform blank model. The second shape acquisition step S7 is a shape acquisition step of press-formed part using cycle deviation waveform blank. Each configuration will be described in detail below by citing, as an example, a case where press forming is performed with a press-formed part 1 in FIG. 2 as a target shape. Although, in the embodiment, a blank model of a 1.5 GPa-class steel sheet having a sheet thickness of 1.2 mm is used, this is not a limitation.

### <first Blank Generation Step>

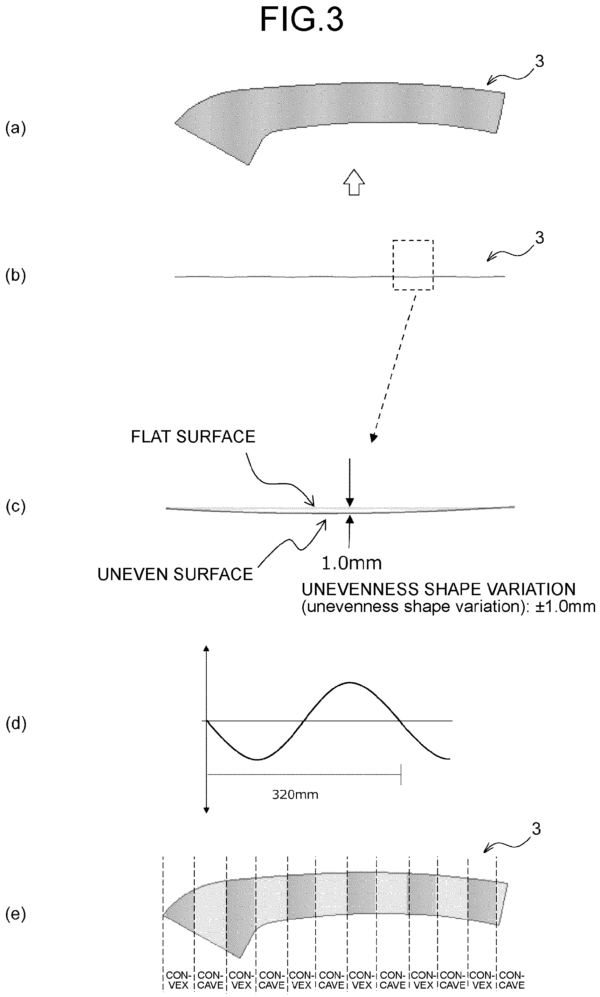

In the first blank generation step S1, a standard waveform blank model 3 (see FIG. 3(a)) having a shape corresponding to a shape variation of a metal sheet, for example, an uneven waveform is generated. A specific shape will be described below.

FIG. 3(a) illustrates an example of a blank model having a cyclic waveform with a predetermined wavelength and a predetermined amplitude. FIG. 3(a) expresses unevenness by shade of color. FIG. 3(b) corresponds to FIG. 3(a) viewed from a direction of an open arrow. FIG. 3(c) is a partially enlarged view of FIG. 3(b). FIG. 3 illustrates, in an example, a shape of a sheet thickness of 1.2 mm, an amplitude of unevenness of ±1.0 mm, and a wavelength (see FIG. 3(d)) of unevenness of 320 mm. FIG. 3(e) highlights an uneven portion having the shape in FIG. 3(a). Furthermore, a start position and an end position of unevenness to be set in the blank are not required to be set at blank edges.

The standard waveform blank model 3 generated in the first blank generation step S1 may be generated by measuring the shape of an actual blank with, for example, a 3D shape measuring instrument including a laser rangefinder and referring to the measurement result (e.g., by using representative wavelength and amplitude in setting). The actual blank has been taken from a metal sheet having a shape variation at a predetermined position.

### <first Shape Acquisition Step>

In the first shape acquisition step S3, press forming analysis in a case where press forming is performed with a predetermined tool-of-press-forming model is performed by using the standard waveform blank model 3, and a shape of a press-formed part after die release is acquired as a first shape.

In the press forming analysis, CAE analysis such as a finite element method (FEM) is usually performed. Both crash forming and deep drawing may be adopted as forming by the CAE analysis. In the embodiment, description will be given by citing the crash forming as an example. The "press forming analysis" in the description includes both analysis for acquiring a shape of a bottom dead center and analysis for acquiring a shape after die release, that is, after springback.

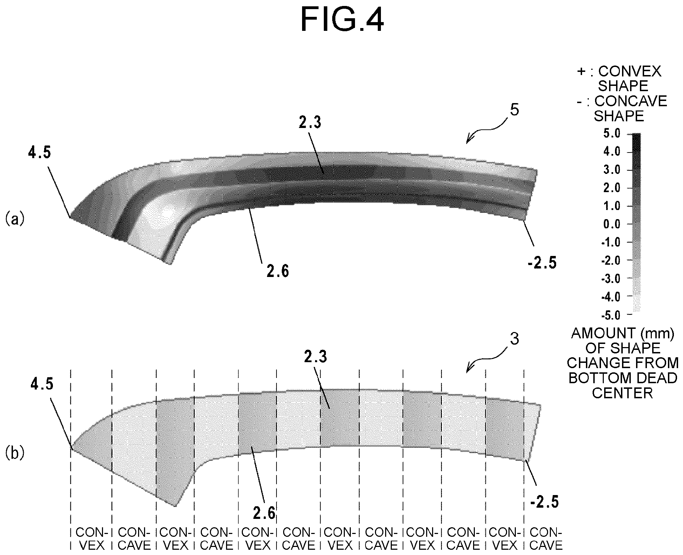

FIG. 4(a) illustrates a first shape 5, which is a shape after die release in press forming analysis using the standard waveform blank model 3. FIG. 4(a) illustrates an amount of shape change from the bottom dead center by shade of color in addition to the shape. The amount of shape change is a value obtained by subtracting the height of a corresponding portion of a bottom dead center shape from the height of each portion of the shape of the press-formed part after die release and springback after press forming in a press forming direction, and corresponds to a springback amount in the press forming direction. When a height difference (amount of shape change) is plus (+), a more convex shape than the bottom dead center shape is made. When the height difference (amount of shape change) is minus (-), a more concave shape than the bottom dead center shape is made. FIG. 4(a) illustrates a portion having a more concave shape than the bottom dead center in light color, and illustrates a portion having a more convex shape in dark color. Furthermore, numbers with + displayed in the figure denote an amount of shape change in a convex direction, and those with - denote an amount of shape change in a concave direction. Then, mm is used as a unit for the numbers.

In the example, as illustrated in FIG. 4(a), the first shape 5 has an amount of shape change of 4.5 mm at a left end portion, 2.6 mm at a bottom portion, 2.3 mm at a center portion in a longitudinal direction, and -2.5 mm at a right end portion. In order to indicate the correspondence relation between a blank shape before press forming and an amount of shape change after springback, FIG. 4(b) illustrates an amount of shape change of each portion in association with the blank shape.

### <second Blank Generation Step>

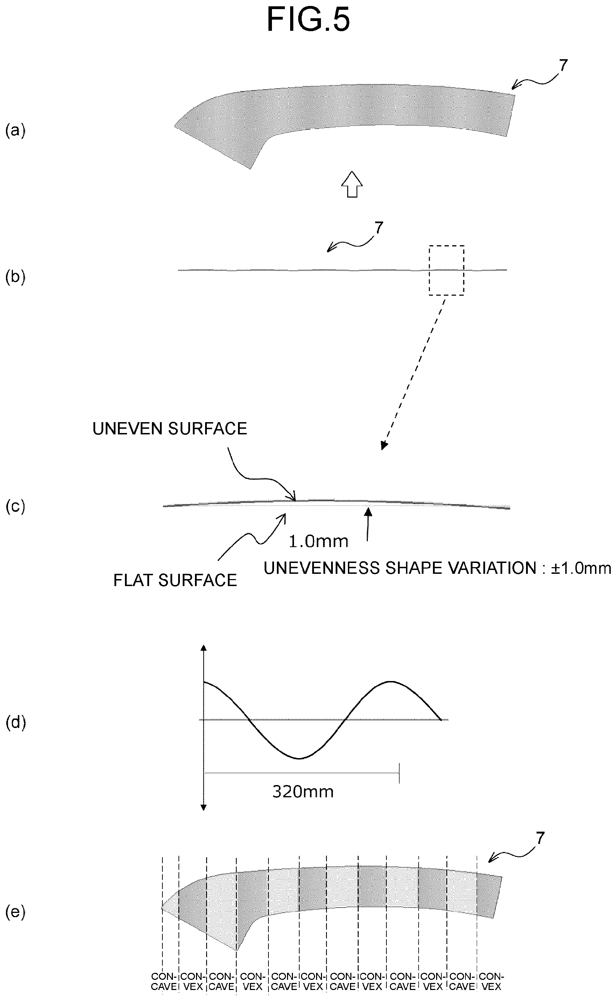

In the second blank generation step S5, a cycle deviation waveform blank model 7 (see FIG. 5(a)) is generated. The cycle deviation waveform blank model 7 has a waveform with the same wavelength and amplitude as those of the waveform of the standard waveform blank model 3 and a cycle deviating from that of the waveform of the standard waveform blank model 3. A specific shape will be described below.

FIG. 5(a) illustrates an example of a blank model having a cyclic waveform with a predetermined wavelength and a predetermined amplitude. FIG. 5(a) expresses unevenness by shade of color. FIG. 5(b) corresponds to FIG. 5(a) viewed from a direction of an open arrow. FIG. 5(c) is a partially enlarged view of FIG. 5(b). Although, in the example in FIG. 5, a sheet thickness of 1.2 mm is provided, and unevenness has the same amplitude and wavelength as those of the standard waveform blank model 3 in FIG. 3, a cycle of the waveform deviates from that of the standard waveform blank model 3 to the right side of a paper surface by a 1/4 wavelength (see FIGS. 5(d) and 5(e)).

### <second Shape Acquisition Step>

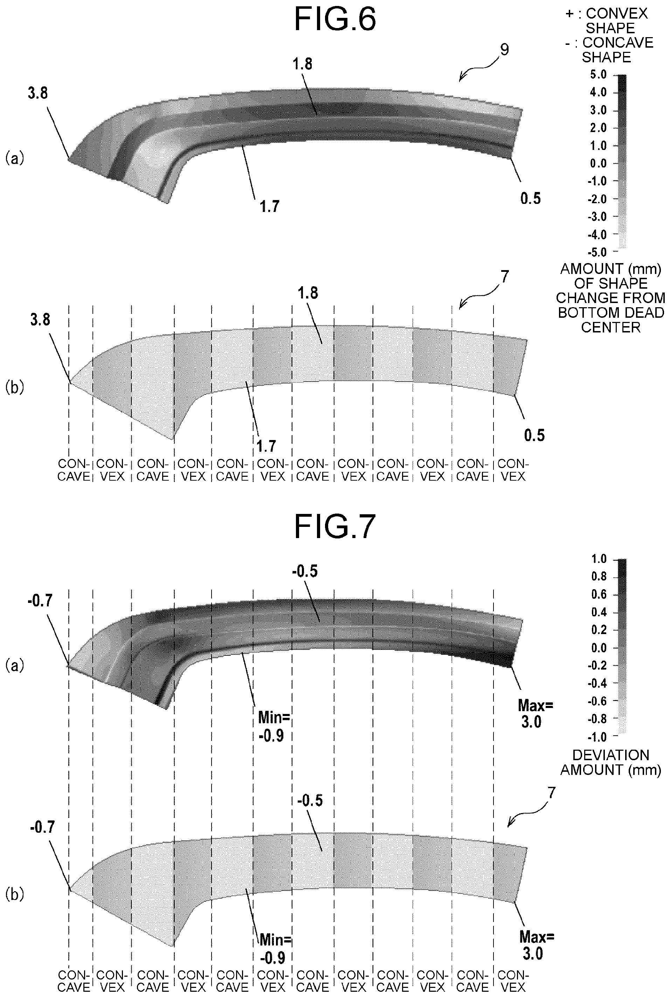

In the second shape acquisition step S7, press forming analysis in a case where press forming is performed with a predetermined tool-of-press-forming model is performed by using the cycle deviation waveform blank model 7, and a shape of a press-formed part after die release is acquired as a second shape. FIG. 6(a) illustrates a second shape 9. Colors and numerical values in FIG. 6(a) are the same as those in FIG. 4(a).

In the example, as illustrated in FIG. 6(a), the second shape 9 has an amount of shape change of 3.8 mm at a left end portion, 1.7 mm at a bottom portion, 1.8 mm at a center portion in a longitudinal direction, and 0.5 mm at a right end portion. FIG. 6(b) illustrates an amount of shape change of each portion in association with a blank shape.

### <Deviation Amount Acquisition Step>

In the deviation amount acquisition step S9, the first shape 5 and the second shape 9 are compared with each other to obtain a portion where both of the shapes deviate from each other and a deviation amount.

In the embodiment, the shape of a press-formed part at the bottom dead center is defined as a reference shape. An amount of shape change (springback amount) from the reference shape in each portion of the press-formed part obtained by CAE analysis is obtained. The amount of shape change is compared with that in a case where a blank is replaced. A difference between the amounts of shape change due to the replacement of the blank is obtained as the deviation amount. That is, the deviation amount obtained in the deviation amount acquisition step S9 is a value obtained by subtracting the amount of shape change (FIG. 4) of the first shape 5 using the standard waveform blank model 3 from the amount of shape change (FIG. 6) of the second shape 9 using the cycle deviation waveform blank model 7. Therefore, in a case of plus (+) of the difference (deviation amount) between the amounts of shape change, the portion of the second shape 9 has a more convex shape than the first shape 5. In a case of minus (-) of the difference (deviation amount) between the amounts of shape change, the portion of the second shape 9 has a more concave shape than the first shape 5.

FIGS. 7(a) and 7(b) illustrate the deviation amount obtained as described above and the uneven waveform of the cycle deviation waveform blank model 7 in association with each other. In the figure, Max represents a maximum value of the convex shape, and Min represents a maximum value (minimum in numerical value) of the concave shape. As illustrated in FIG. 7(a), a deviation amount between the first shape 5 and the second shape 9 is -0.7 mm at a left end portion, -0.9 mm at a bottom portion, -0.5 mm at a center portion in a longitudinal direction, and 3.0 mm at a right end portion. Therefore, it has been found that even a blank having a waveform with the same wavelength and amplitude particularly has an influence on the shape of the press-formed part at the right end portion if a cycle varies and deviates by a 1/4 wavelength.

The first shape 5 and the second shape 9 for which a deviation amount has been obtained may be developed into a blank by analysis of reverse press-forming to identify portions of the standard waveform blank model 3 and the cycle deviation waveform blank model 7 that influence the deviation amount.

According to the embodiment, it is possible to know a portion where a shape variation of a blank has a large influence on the shape of a press-formed part after springback, specifically, a portion where the shape of the press-formed part after springback is made likely to deviate by the occurrence of the difference between shape variations (uneven portions) of respective blanks and a deviation amount thereof. Furthermore, a step to identify portions requiring countermeasures (identification step) may be provided to determine the quality of the press-formed part based on the deviation amount and a predetermined threshold. The quality of a blank may be thereby predicted. For example, when a plurality of press-formed parts is overlapped and joined to be assembled into members of an automotive body, a large deviation amount of a flange portion particularly makes it difficult to join the press-formed parts. Therefore, countermeasures through a shape of a tool of press forming and the like can be taken by providing a predetermined threshold in the deviation amount and identifying a portion having a deviation amount exceeding the threshold as a portion requiring countermeasures, which also leads to improvement of productivity of press-formed parts. For example, in FIG. 7, when the threshold of the deviation amount is set to ±1.0 mm, a right end portion in the shape of a press-formed part can be identified as a portion susceptible to an influence of a shape variation of the blank, so that countermeasures can be taken by correcting a part of a tool of press forming of the corresponding portion.

Although only one type of cycle deviation waveform blank model is generated in the above description, a plurality of types of cycle deviation waveform blank models may be generated. In that case, cycles of waveforms of the cycle deviation waveform blank models deviate from each other (the wavelength and amplitude are common to a waveform blank model and all the cycle deviation waveform blank models). Analysis in more specific consideration of the difference between shape variations of actual blanks can be performed by increasing the number of patterns of a blank model assuming a shape variation blank.

Furthermore, although, in the above description, the difference between amounts of shape change (springback amounts) from the bottom dead center in the press forming direction is defined as a deviation amount in comparison between the first shape 5 and the second shape 9, the present invention is not limited thereto. For example, a difference obtained by directly subtracting the height of each portion of the shape of a press-formed part after die release (after spring back) in a case of using the cycle deviation waveform blank model 7 from the height of each portion of the shape of the press-formed part after die release (after springback) in a case of using the standard waveform blank model 3 in the press forming direction may be defined as the deviation amount. In this case, however, it is necessary to set a fixed point common to two shapes of press-formed parts. The deviation amount may vary depending on how the fixed point is selected. In this regard, the deviation amount can be preferably obtained based on a stable standard when amounts of shape change from the bottom dead center shape are compared with each other as in the embodiment.

### [Second Embodiment]

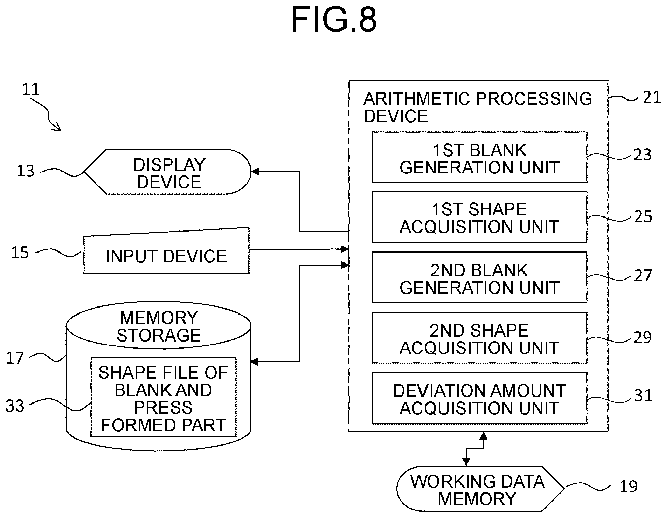

The press forming analysis method described in the first embodiment can be implemented by causing a computer to execute a preset program. A press forming analysis apparatus, which is one example of such an apparatus, will be described in a present embodiment. As illustrated in FIG. 8, a press forming analysis apparatus 11 according to the embodiment includes a computer such as a personal computer (PC). The press forming analysis apparatus 11 includes a display device 13, an input device 15, a memory storage 17, a working data memory 19, and an arithmetic processing device 21. Then, the display device 13, the input device 15, the memory storage 17, and the working data memory 19 are connected to the arithmetic processing device 21. Respective functions are executed by commands from the arithmetic processing device 21. Each configuration of the press forming analysis apparatus according to the embodiment will be described below with the press-formed part 1 in FIG. 2 as an analysis target.

### <<Display Device>>

The display device 13 is used for displaying an analysis result, for example. The display device 13 includes an LCD monitor.

### <<Input Device>>

The input device 15 is used for giving an instruction to display a blank, a press-formed part, and the like and inputting a condition of an operator, for example. The input device 15 includes a keyboard and a mouse.

### <<Memory Storage>>

The memory storage 17 is used for storing various files such as a shape file 33 of a blank and a press-formed part, for example. The memory storage 17 includes a hard disk.

### <<Working Data Memory>>

The working data memory 19 is used for temporarily storing data to be used by the arithmetic processing device 21 and performing an arithmetic operation. The working data memory 19 includes a random access memory (RAM).

### <<Arithmetic Processing Device>>

As illustrated in FIG. 8, the arithmetic processing device 21 includes: a first blank generation unit 23; a first shape acquisition unit 25; a second blank generation unit 27; a second shape acquisition unit 29; and a deviation amount acquisition unit 31. The first blank generation unit 23 is a generation unit of standard waveform blank model. The first shape acquisition unit 25 is a shape acquisition unit of press-formed part using standard waveform blank. The second blank generation unit 27 is a generation unit of cycle deviation waveform blank model. The second shape acquisition unit 29 is a shape acquisition unit of press-formed part using cycle deviation waveform blank. The arithmetic processing device 21 includes a central processing unit (CPU). Furthermore, a unit to identify portions requiring countermeasures (hereinafter, abbreviated as identification unit) may be further included. The respective units function when the CPU executes a predetermined program. The functions of the above-described respective units in the arithmetic processing device 21 will be described below.

The first blank generation unit 23 executes the first blank generation step S1 described in the first embodiment. Similarly, the first shape acquisition unit 25 executes the first shape acquisition step S3. The second blank generation unit 27 executes the second blank generation step S5. The second shape acquisition unit 29 executes the second shape acquisition step S7. The deviation amount acquisition unit 31 executes the deviation amount acquisition step S9. The identification unit executes the identification step.

According to the press forming analysis apparatus 11 of the embodiment, as in the first embodiment, it is possible to know a portion where a shape variation of a blank has a large influence on the shape of a press-formed part, specifically, a portion where the shape of the press-formed part after springback is made likely to deviate by the occurrence of the difference between shape variations of respective blanks and a deviation amount thereof. Furthermore, the quality of a blank can be predicted by determining the quality of a press-formed part based on the deviation amount and a predetermined threshold. Moreover, a portion, for which countermeasures through the shape of a tool of press forming and countermeasures by a change in the shape of a press-formed part are taken in a case where a blank is predicted to have a large influence of a shape variation, can be identified by providing the identification unit that identifies a portion having a deviation amount exceeding a preset threshold as a portion requiring countermeasures.

As described above, the first blank generation unit 23, the first shape acquisition unit 25, the second blank generation unit 27, the second shape acquisition unit 29, the deviation amount acquisition unit 31, and the identification unit in the press forming analysis apparatus 11 of the embodiment are implemented by the CPU executing a predetermined program. Therefore, a press forming analysis program according to the present invention can be identified as causing a computer to function as the first blank generation unit 23, the first shape acquisition unit 25, the second blank generation unit 27, the second shape acquisition unit 29, the deviation amount acquisition unit 31, and the identification unit.

### [Example]

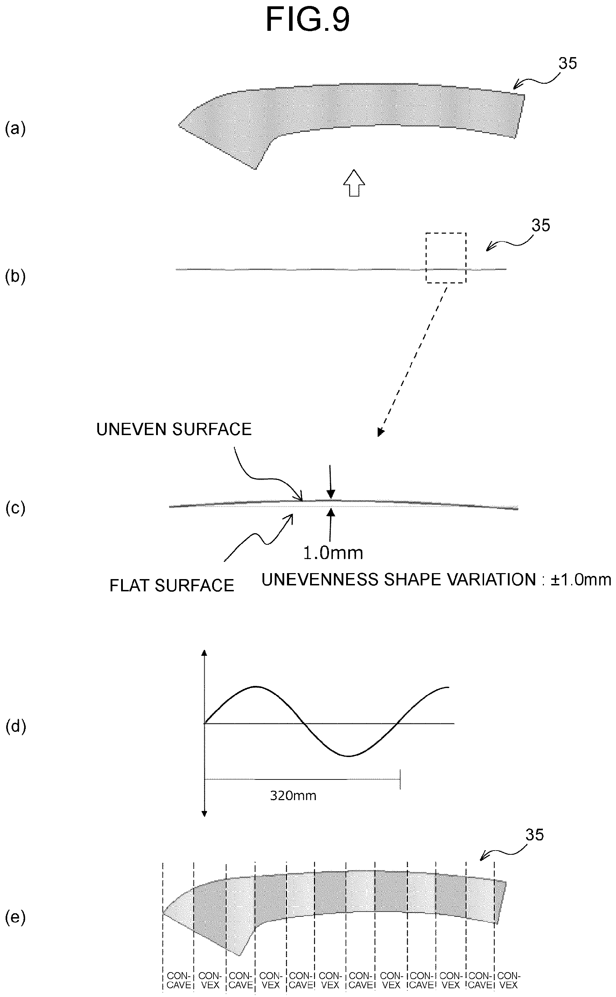

In order to confirm effects of the present invention, the press forming analysis method described with reference to FIG. 1 was performed. For press forming through CAE analysis in the example, crash forming was adopted as in the embodiments. In the example, a blank model of a 1.5 GPa-class steel sheet having a sheet thickness of 1.2 mm was used. Furthermore, in the example, the first blank generation step S1 and the first shape acquisition step S3 were performed as in the first embodiment. Therefore, since the standard waveform blank model 3 and the first shape 5 are similar to those in FIGS. 3 and 4, descriptions thereof are omitted. The second blank generation step S5 and the subsequent steps will be described with reference to FIGS. 9 to 11. Numerical values, shade of color, a convex shape, a concave shape, Max, and Min in FIGS. 9 to 11 are the same as those in the above-described first embodiment.

FIG. 9(a) illustrates a cycle deviation waveform blank model 35 generated in the second blank generation step S5 in the example. FIG. 9(b) corresponds to FIG. 9(a) viewed from a direction of an open arrow. Furthermore, FIG. 9(c) is a partially enlarged view of FIG. 9(b). Although, in the example in FIG. 9, a sheet thickness and the amplitude and wavelength of a waveform (unevenness) are the same as those of the standard waveform blank model 3 in FIG. 3, a cycle of the waveform deviates from that of the standard waveform blank model 3 by a 1/2 wavelength (see FIGS. 9(d) and 9(e)).

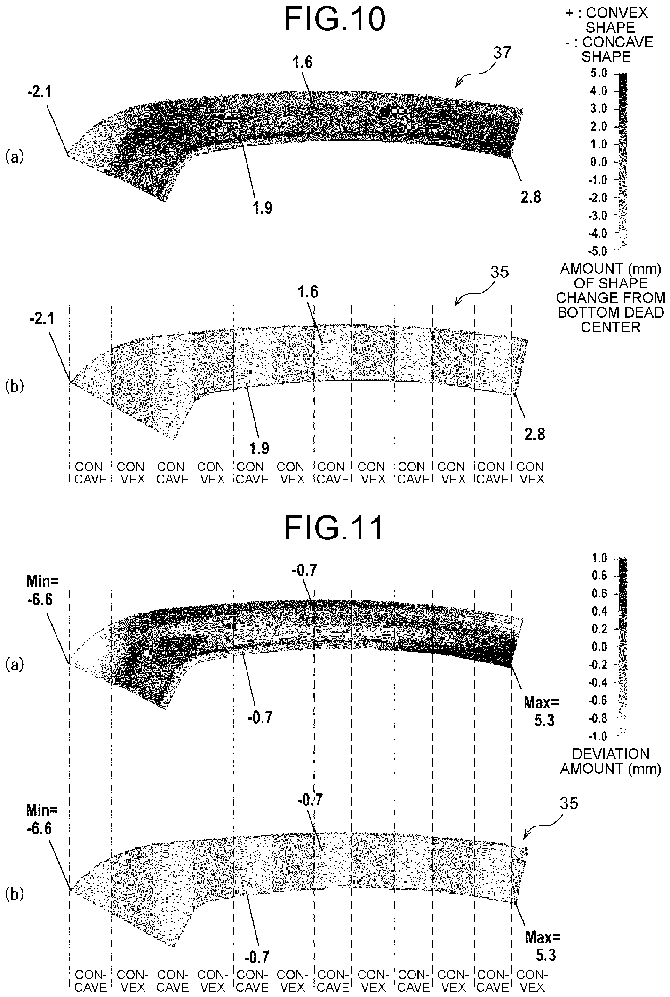

FIG. 10(a) illustrates a second shape 37 acquired by performing the second shape acquisition step S7 using the cycle deviation waveform blank model 35 in FIG. 9. As illustrated in FIG. 10(a), the second shape 37 has an amount of shape change of -2.1 mm at a left end portion, 1.9 mm at a bottom portion, 1.6 mm at a center portion in a longitudinal direction, and 2.8 mm at a right end portion. FIG. 10(b) illustrates an amount of shape change of each portion in association with a blank shape.

FIGS. 11(a) and 11(b) illustrate a deviation amount obtained by comparing the first shape 5 with the second shape 37 in the deviation amount acquisition step S9 and the uneven shape of the cycle deviation waveform blank model 35 in association with each other. As illustrated in FIG. 11(a), a deviation amount between the first shape 5 and the second shape 37 is -6.6 mm at a left end portion, - 0.7 mm at a bottom portion, -0.7 mm at a center portion in a longitudinal direction, and 5.3 mm at a right end portion.

In the example, the press-formed part has a large amount of deviation at the left end portion and the right end portion. Therefore, it has been found that even a blank having a waveform with the same wavelength and amplitude particularly has an influence on the shape of the press-formed part at the left end portion and the right end portion if a cycle deviates by a 1/2 wavelength. Therefore, a press-formed part having a good shape can be stably manufactured by taking countermeasures by correcting a tool of press forming for a corresponding portion.

### Industrial Applicability

According to the present invention, it is possible to predict an influence of the shape variation of a blank taken from a metal sheet having a shape variation on the dimensional accuracy of a press-formed part in a case where press forming is performed by using the blank, rapidly take countermeasures for improving the dimensional accuracy, and improve the productivity of the press-formed part.

### Reference Signs List

1 PRESS-FORMED PART (TARGET SHAPE)
3 STANDARD WAVEFORM BLANK MODEL
5 SHAPE OF PRESS-FORMED PART USING STANDARD WAVEFORM BLANK (first SHAPE)
7 CYCLE DEVIATION WAVEFORM BLANK MODEL
9 SHAPE OF PRESS-FORMED PART USING CYCLE DEVIATION WAVEFORM BLANK (second SHAPE)
11 PRESS FORMING ANALYSIS APPARATUS
13 DISPLAY DEVICE
15 INPUT DEVICE
17 MEMORY STORAGE
19 WORKING DATA MEMORY
21 ARITHMETIC PROCESSING DEVICE
23 GENERATION UNIT OF STANDARD WAVEFORM BLANK MODEL (first BLANK GENERATION UNIT)
25 SHAPE ACQUISITION UNIT OF PRESS-FORMED PART USING STANDARD WAVEFORM BLANK (first SHAPE ACQUISITION UNIT)
27 GENERATION UNIT OF CYCLE DEVIATION WAVEFORM BLANK MODEL (second BLANK GENERATION UNIT)
29 SHAPE ACQUISITION UNIT OF PRESS-FORMED PART USING CYCLE DEVIATION WAVEFORM BLANK (second SHAPE ACQUISITION UNIT)
31 DEVIATION AMOUNT ACQUISITION UNIT
33 SHAPE FILE OF BLANK AND PRESS-FORMED PART
35 CYCLE DEVIATION WAVEFORM BLANK MODEL (EXAMPLE)
37 SHAPE OF PRESS-FORMED PART USING CYCLE DEVIATION WAVEFORM BLANK (EXAMPLE)

## Claims

1. A press forming analysis method for predicting an influence of a shape variation of a blank taken from a metal sheet having the shape variation in a case where press forming is performed by using the blank, comprising:
a first blank generation step (S1) of generating a standard waveform blank model (3) having a waveform with a predetermined wavelength and a predetermined amplitude in accordance with the shape variation;
a first shape acquisition step (S3) of acquiring a shape of a press-formed part (1) after die release as a first shape (5) by performing press forming analysis by using the standard waveform blank model (3) in a case where press forming is performed with a predetermined tool-of-press-forming model;
a second blank generation step (S5) of generating one or a plurality of types of cycle deviation waveform blank models (7) having a waveform with a same amplitude as an amplitude of a waveform of the standard waveform blank model (3) and a cycle deviating from a cycle of the waveform of the standard waveform blank model (3);
a second shape acquisition step (S7) of acquiring a shape of a press-formed part (1) after die release as a second shape (9) by performing press forming analysis by using the cycle deviation waveform blank model (7) in a case where press forming is performed with the predetermined tool-of-press-forming model; and
a deviation amount acquisition step (S9) of obtaining a portion where both of the shapes (5, 9) deviate from each other and a deviation amount by comparing the first shape (5) with one or a plurality of types of second shapes (9).

2. The press forming analysis method according to claim 1, wherein the standard waveform blank model (3) generated in the first blank generation step (S1) is a blank model generated based on a measurement result obtained by measuring a shape of an actual blank taken from the metal sheet.

3. The press forming analysis method according to claim 1 or 2, wherein, in the deviation amount acquisition step (S9), a difference between a springback amount of a predetermined portion in the first shape (5) and a springback amount of a same portion as the predetermined portion of the first shape in the second shape (9) is acquired as the deviation amount.

4. The press forming analysis method according to any one of claims 1 to 3, further comprising an identification step of identifying a portion where the deviation amount exceeds a preset threshold as a portion requiring a countermeasure.

5. A press forming analysis apparatus (11) for predicting an influence of a shape variation of a blank taken from a metal sheet having the shape variation in a case where press forming is performed by using the blank, comprising:
a first blank generation unit (23) configured to generate a standard waveform blank model (3) having a waveform with a predetermined wavelength and a predetermined amplitude in accordance with the shape variation;
a first shape acquisition unit (25) configured to acquire a shape of a press-formed part after die release as a first shape (5) by performing press forming analysis by using the standard waveform blank model (3) in a case where press forming is performed with a predetermined tool-of-press-forming model;
a second blank generation unit (27) configured to generate one or a plurality of types of cycle deviation waveform blank models (7) having a waveform with a same amplitude as an amplitude of a waveform of the standard waveform blank model (3) and a cycle deviating from a cycle of the waveform of the standard waveform blank model (3);
a second shape acquisition unit (29) configured to acquire a shape of a press-formed part after die release as a second shape (9) by performing press forming analysis by using the cycle deviation waveform blank model (7) in a case where press forming is performed with the predetermined tool-of-press-forming model; and
a deviation amount acquisition unit (31) configured to obtain a portion where both of the shapes (5, 9) deviate from each other and a deviation amount by comparing the first shape (5) with one or a plurality of types of second shapes (9).

6. The press forming analysis apparatus (11) according to claim 5, wherein the standard waveform blank model (3) generated by the first blank generation unit (23) is a blank model generated based on a measurement result obtained by measuring a shape of an actual blank taken from the metal sheet.

7. The press forming analysis apparatus (11) according to claim 5 or 6, wherein the deviation amount acquisition unit (31) is configured to acquire, as the deviation amount, a difference between a springback amount of a predetermined portion in the first shape (5) and a springback amount of a same portion as the predetermined portion of the first shape in the second shape (9).

8. The press forming analysis apparatus (11) according to any one of claims 5 to 7, further comprising an identification unit configured to identify a portion where the deviation amount exceeds a preset threshold as a portion requiring a countermeasure.

9. A press forming analysis program causing a computer to function as the press forming analysis apparatus (11) according to any one of claims 5 to 8.

## Patentansprüche

1. Pressformanalyseverfahren zum Vorhersagen eines Einflusses einer Gestaltvariation eines aus einer Metallfolie entnommenen Rohlings, der die Gestaltvariation aufweist, in einem Fall, in dem das Pressformen unter Verwendung des Rohlings durchgeführt wird, umfassend:
einen ersten Rohlingserzeugungsschritt (S1) zum Erzeugen eines Standardwellenform-Rohlingsmodells (3), das eine Wellenform mit einer vorbestimmten Wellenlänge und einer vorbestimmten Amplitude in Übereinstimmung mit der Gestaltvariation aufweist;
einen ersten Gestalterfassungsschritt (S3) zum Erfassen einer Gestalt eines pressgeformten Teils (1) nach der Formfreigabe als eine erste Gestalt (5) durch Durchführen einer Pressformanalyse unter Verwendung des Standardwellenform-Rohlingsmodells (3) in einem Fall, in dem das Pressformen mit einem vorbestimmten Pressformwerkzeugmodell durchgeführt wird;
einen zweiten Rohlingserzeugungsschritt (S5) des Erzeugens eines oder einer Vielzahl von Typen von Zyklusabweichungswellenform-Rohlingsmodellen (7), die eine Wellenform mit einer gleichen Amplitude wie eine Amplitude einer Wellenform des Standardwellenform-Rohlingsmodells (3) und eine Zyklusabweichung von einem Zyklus der Wellenform des Standardwellenform-Rohlingsmodells (3) aufweisen;
einen zweiten Formerfassungsschritt (S7) des Erfassens einer Gestalt eines pressgeformten Teils (1) nach der Formfreigabe als eine zweite Gestalt (9) durch Durchführen einer Pressformanalyse unter Verwendung des Zyklusabweichungswellenform-Rohlingmodells (7) in einem Fall, in dem das Pressformen mit dem vorbestimmten Pressformwerkzeugmodell durchgeführt wird; und
einen Abweichungsbetragserfassungsschritt (S9) des Erhaltens eines Abschnitts, in dem beide der Gestalten (5, 9) voneinander abweichen, und eines Abweichungsbetrags durch Vergleichen der ersten Gestalt (5) mit einem oder einer Vielzahl von Typen von zweiten Gestalten (9).

2. Pressformanalyseverfahren nach Anspruch 1, wobei das im ersten Rohlingserzeugungsschritt (S1) erzeugte Standardwellenform-Rohlingsmodell (3) ein Rohlingsmodell ist, das basierend auf einem Messungsergebnis erzeugt wird, das durch Messen einer Gestalt eines tatsächlichen Rohlings, der der Metallfolie entnommen wird, erhalten wird.

3. Pressformanalyseverfahren nach Anspruch 1 oder 2, wobei in dem Abweichungsbetragserfassungsschritt (S9) eine Differenz zwischen einem Rückfederungsbetrag eines vorbestimmten Abschnitts in der ersten Gestalt (5) und einem Rückfederungsbetrag eines gleichen Abschnitts wie der vorbestimmte Abschnitt der ersten Gestalt in der zweiten Gestalt (9) als der Abweichungsbetrag erfasst wird.

4. Pressformanalyseverfahren nach einem der Ansprüche 1 bis 3, weiter umfassend einen Identifikationsschritt des Identifizierens eines Abschnitts, in dem der Abweichungsbetrag einen voreingestellten Schwellenwert überschreitet, als einen Abschnitt, der eine Gegenmaßnahme erfordert.

5. Pressformanalyseeinrichtung (11) zum Vorhersagen eines Einflusses einer Gestaltvariation eines aus einer Metallfolie entnommenen Rohlings, der die Gestaltvariation aufweist, in einem Fall, in dem das Pressformen unter Verwendung des Rohlings durchgeführt wird, umfassend:
eine erste Rohlingserzeugungseinheit (23), die ausgebildet ist, um ein Standardwellenform-Rohlingsmodell (3) zu erzeugen, das eine Wellenform mit einer vorbestimmten Wellenlänge und einer vorbestimmten Amplitude in Übereinstimmung mit der Gestaltvariation aufweist;
eine erste Gestalterfassungseinheit (25), die ausgebildet ist, um eine Gestalt eines pressgeformten Teils nach der Formfreigabe als eine erste Gestalt (5) durch Durchführen einer Pressformanalyse unter Verwendung des Standardwellenform-Rohlingsmodells (3) in einem Fall, in dem das Pressformen mit einem vorbestimmten Pressformwerkzeugmodell durchgeführt wird, zu erfassen;
eine zweite Rohlingserzeugungseinheit (27), die ausgebildet ist, um einen oder eine Vielzahl von Typen von Zyklusabweichungswellenform-Rohlingsmodellen (7) zu erzeugen, die eine Wellenform mit derselben Amplitude wie eine Amplitude einer Wellenform des Standardwellenform-Rohlingsmodells (3) und eine Zyklusabweichung von einem Zyklus der Wellenform des Standardwellenform-Rohlingsmodells (3) aufweisen;
eine zweite Gestalterfassungseinheit (29), die ausgebildet ist, um eine Gestalt eines pressgeformten Teils nach der Formfreigabe als eine zweite Gestalt (9) durch Durchführen einer Pressformanalyse unter Verwendung des Zyklusabweichungswellenform-Rohlingmodells (7) in einem Fall, in dem das Pressformen mit dem vorbestimmten Pressformwerkzeugmodell durchgeführt wird, zu erfassen; und
eine Abweichungsbetragserfassungseinheit (31), die ausgebildet ist, um einen Abschnitt, in dem beide Gestalten (5, 9) voneinander abweichen, und einen Abweichungsbetrag durch Vergleichen der ersten Gestalt (5) mit einem oder einer Vielzahl von Typen von zweiten Gestalten (9) zu erhalten.

6. Pressformanalyseeinrichtung (11) nach Anspruch 5, wobei das von der ersten Rohlingserzeugungseinheit (23) erzeugte Standardwellenform-Rohlingsmodell (3) ein Rohlingsmodell ist, das basierend auf einem Messungsergebnis erzeugt wird, das durch Messen einer Gestalt eines tatsächlichen Rohlings, der der Metallfolie entnommen wird, erhalten wird.

7. Pressformanalyseeinrichtung (11) nach Anspruch 5 oder 6, wobei die Abweichungsbetragserfassungseinheit (31) ausgebildet ist, um als den Abweichungsbetrag eine Differenz zwischen einem Rückfederungsbetrag eines vorbestimmten Abschnitts in der ersten Gestalt (5) und einem Rückfederungsbetrag eines gleichen Abschnitts wie der vorbestimmte Abschnitt der ersten Gestalt in der zweiten Gestalt (9) zu erfassen.

8. Pressformanalyseeinrichtung (11) nach einem der Ansprüche 5 bis 7, weiter umfassend eine Identifikationseinheit, die ausgebildet ist, um einen Abschnitt, in dem der Abweichungsbetrag einen voreingestellten Schwellenwert überschreitet, als einen Abschnitt zu identifizieren, der eine Gegenmaßnahme erfordert.

9. Pressformanalyseprogramm, das einen Computer veranlasst, als die Pressformanalyseeinrichtung (11) nach einem der Ansprüche 5 bis 8 zu funktionieren.

## Revendications

1. Procédé d'analyse de formage à la presse pour prédire une influence d'une variation de forme d'un flan prélevé à partir d'une tôle métallique présentant la variation de forme dans un cas où un formage à la presse est effectué en utilisant le flan, comprenant :
une étape (S1) de génération de premier flan consistant à générer un modèle (3) de flan à forme d'onde standard présentant une forme d'onde avec une longueur d'onde prédéterminée et une amplitude prédéterminée conformément à la variation de forme ;
une étape (S3) d'acquisition de première forme consistant à acquérir une forme d'une pièce (1) formée à la presse après libération de l'outillage en tant que première forme (5) en effectuant une analyse de formage à la presse en utilisant le modèle (3) de flan à forme d'onde standard dans un cas où le formage à la presse est effectué avec un modèle d'outil de formage à la presse prédéterminé ;
une étape (S5) de génération de deuxième flan consistant à générer un ou plusieurs types de modèles (7) de flan à forme d'onde à écart de cycle présentant une forme d'onde avec une même amplitude qu'une amplitude d'une forme d'onde du modèle (3) de flan à forme d'onde standard et un cycle s'écartant d'un cycle de la forme d'onde du modèle (3) de flan à forme d'onde standard ;
une étape (S7) d'acquisition de deuxième forme consistant à acquérir une forme d'une pièce (1) formée à la presse après libération de l'outillage en tant que deuxième forme (9) en effectuant une analyse de formage à la presse en utilisant le modèle (7) de flan à forme d'onde à écart de cycle dans un cas où le formage à la presse est effectué avec le modèle d'outil de formage à la presse prédéterminé ; et
une étape (S9) d'acquisition de quantité d'écart consistant à obtenir une partie où les deux formes (5, 9) présentent un écart l'une par rapport à l'autre et une quantité d'écart en comparant la première forme (5) avec un ou plusieurs types de deuxièmes formes (9).

2. Procédé d'analyse de formage à la presse selon la revendication 1, dans lequel le modèle (3) de flan à forme d'onde standard généré dans l'étape (S1) de génération de premier flan est un modèle de flan généré sur la base d'un résultat de mesure obtenu en mesurant une forme d'un flan réel prélevé à partir de la tôle métallique.

3. Procédé d'analyse de formage à la presse selon la revendication 1 ou la revendication 2, dans lequel, dans l'étape (S9) d'acquisition de quantité d'écart, une différence entre une quantité de retour élastique d'une partie prédéterminée dans la première forme (5) et une quantité de retour élastique d'une même partie que la partie prédéterminée de la première forme dans la deuxième forme (9) est acquise en tant que quantité d'écart.

4. Procédé d'analyse de formage à la presse selon l'une quelconque des revendications 1 à 3, comprenant en outre une étape d'identification consistant à identifier une partie où la quantité d'écart dépasse un seuil prédéfini en tant que partie nécessitant une contre-mesure.

5. Dispositif (11) d'analyse de formage à la presse pour prédire une influence d'une variation de forme d'un flan prélevé à partir d'une tôle métallique présentant la variation de forme dans un cas où un formage à la presse est effectué en utilisant le flan, comprenant :
une unité de génération (23) de premier flan configurée pour générer un modèle (3) de flan à forme d'onde standard présentant une forme d'onde avec une longueur d'onde prédéterminée et une amplitude prédéterminée conformément à la variation de forme ;
une unité d'acquisition (25) de première forme configurée pour acquérir une forme d'une pièce formée à la presse après libération de l'outillage en tant que première forme (5) en effectuant une analyse de formage à la presse en utilisant le modèle (3) de flan à forme d'onde standard dans un cas où le formage à la presse est effectué avec un modèle d'outil de formage à la presse prédéterminé ;
une unité de génération (27) de deuxième flan configurée pour générer un ou plusieurs types de modèles (7) de flan à forme d'onde à écart de cycle présentant une forme d'onde avec une même amplitude qu'une amplitude d'une forme d'onde du modèle (3) de flan à forme d'onde standard et un cycle s'écartant d'un cycle de la forme d'onde du modèle (3) de flan à forme d'onde standard ;
une unité d'acquisition (29) de deuxième forme configurée pour acquérir une forme d'une pièce formée à la presse après libération de l'outillage en tant que deuxième forme (9) en effectuant une analyse de formage à la presse en utilisant le modèle (7) de flan à forme d'onde à écart de cycle dans un cas où le formage à la presse est effectué avec le modèle d'outil de formage à la presse prédéterminé ; et
une unité d'acquisition (31) de quantité d'écart configurée pour obtenir une partie où les deux formes (5, 9) présentent un écart l'une par rapport à l'autre et une quantité d'écart en comparant la première forme (5) avec un ou plusieurs types de deuxièmes formes (9).

6. Dispositif (11) d'analyse de formage à la presse selon la revendication 5, dans lequel le modèle (3) de flan à forme d'onde standard généré par l'unité de génération (23) de premier flan est un modèle de flan généré sur la base d'un résultat de mesure obtenu en mesurant une forme d'un flan réel prélevé à partir de la tôle métallique.

7. Dispositif (11) d'analyse de formage à la presse selon la revendication 5 ou la revendication 6, dans lequel l'unité d'acquisition (31) de quantité d'écart est configurée pour acquérir, en tant que quantité d'écart, une différence entre une quantité de retour élastique d'une partie prédéterminée dans la première forme (5) et une quantité de retour élastique d'une même partie que la partie prédéterminée de la première forme dans la deuxième forme (9).

8. Dispositif (11) d'analyse de formage à la presse selon l'une quelconque des revendications 5 à 7, comprenant en outre une unité d'identification configurée pour identifier une partie où la quantité d'écart dépasse un seuil prédéfini en tant que partie nécessitant une contre-mesure.

9. Programme d'analyse de formage à la presse amenant un ordinateur à fonctionner comme le dispositif (11) d'analyse de formage à la presse selon l'une quelconque des revendications 5 à 8.
